Europäisches Patentamt

(19) European Patent Office

Office européen des brevets

(11) Numéro de publication: **0 013 194**

**A1**

# (12) DEMANDE DE BREVET EUROPEEN

(21) Numéro de dépôt: **79400863.1**

(22) Date de dépôt: **14.11.79**

(51) Int. Cl.³: **B 60 C 3/00**

---

(30) Priorité: **27.11.78 FR 7833652**

(43) Date de publication de la demande:
**09.07.80 Bulletin 80/14**

(84) Etats Contractants Désignés:
**DE SE**

(71) Demandeur: **Société dite: MICHELIN & CIE (Compagnie Générale des Etablissements Michelin)**
**4 rue du Terrail**
**F-63000 Clermont-Ferrand(FR)**

(72) Inventeur: **Bideault, Pierre**
**53 rue de Montjuzet**
**F-63100 Clermont-Ferrand(FR)**

(74) Mandataire: **Weiss, Frédéric et al,**
**MICHELIN & CIE - Service K. Brevets**
**F-63040 Clermont-Ferrand Cedex(FR)**

---

(54) **Pneumatique à carcasse radiale.**

(57) Pneumatique à carcasse radiale pour roue de véhicule dont la jante a des siéges inclinés de 15°

Lorsque ce pneumatique est gonflé mais non chargé, la fibre méridienne moyenne de son armature de carcasse (6) suit, entre les points de tangence (8,8') de ladite armature avec la tringle de bourrelet (7) et l'armature de sommet (5), le profil d'équilibre naturel tel que

$$\cos \varphi = \frac{R^2 - Re_1^2}{Rs_1^2 \cdot Re_1^2},$$

la quantité $(Rs_1^2 - Re_1^2)$ étant égale environ à $k.\frac{p_o}{p_1}(Rso^2 - Reo^2)$, $p_o$ étant la pression de gonflage nominale et $p_1$ la pression de gonflage telle que le pneumatique conserve sa flèche nominale sous l'effect d'une surcharge, k étant un coefficient positif compris entre 1 et la valeur du rapport $\frac{p_1}{p_o}$, l'angle $\beta_1$ formé par la tangente à l'armature de carcasse (6) au point de contact (8) avec la tringle et par l'axe de rotation YY' du pneumatique étant tel que

$$\sin \beta = \frac{\sin \beta_o}{k}$$

et la quantité $Re_1^2$ étant égale à
$Rt^2 - \cos \beta_1 (Rs_1^2 - Re_1)$.

EP 0 013 194 A1

Croydon Printing Company Ltd.

La présente invention se rapporte à un pneumatique destiné à équiper les véhicules moyens et gros porteurs (camionnettes et camions) et doté d'une armature de carcasse radiale ancrée à au moins une tringle dans chaque bourrelet et d'une armature de sommet comportant au moins deux nappes obliques de fils ou câbles parallèles dans chaque nappe, mais croisés d'une nappe à l'autre.

L'invention se rapporte plus particulièrement à de tels pneumatiques dépourvus de chambre à air indépendante et montés sur des jantes étanches présentant des sièges tronconiques pour les bourrelets des pneumatiques. De telles jantes de roues correspondent aux normes en usage et ont des sièges inclinés à environ 15° par rapport à l'axe de rotation des roues. Enfin, l'invention concerne les pneumatiques de l'espèce définie dans ce qui précède, dont le rapport H/B de la hauteur radiale H du pneumatique sur la jante à la largeur axiale maximale B du pneumatique est compris entre 0,6 et 1.

Afin de rendre plus aisé et plus rentable le chargement des véhicules moyens et gros porteurs on tend à réduire la hauteur du plan de chargement de ces véhicules. Ceci entraîne le maintien ou la diminution du diamètre extérieur et une surcharge considérable comprise entre 30 et 100 % par rapport à la charge nominale de tels pneumatiques prévue par le fabricant ou les normes en usage, dans le cas où l'on veut éviter la multiplication des essieux. A cette charge correspond une pression de gonflage nominale.

Une solution consiste à augmenter la pression de gonflage de tels pneumatiques. Cependant cette solution d'une part se répercute défavorablement sur l'usure de la bande de roulement, d'autre part accroît la tension de

...

l'armature de carcasse au niveau des bourrelets et, par suite, la tension sur la tringle de bourrelet à laquelle est ancrée, en général par retournement, l'armature de carcasse. Pour pallier cet accroissement des tensions, il faut renforcer simultanément l'armature de carcasse et les tringles, afin de maintenir l'endurance de tels pneumatiques à un niveau satisfaisant. Ceci occasionne une augmentation sensible du prix de revient.

Le but de la présente invention est d'augmenter de 30 à 100 % et, de préférence, d'au moins 50 %,la charge nominale des pneumatiques/de l'espèce considérée, ceci sans de mêmes dimensions, modifier d'une part la tension des tringles de bourrelets, c'est-à-dire sans renforcer les tringles, d'autre part la flèche du pneumatique, correspondant à la charge et à la pression nominales, l'augmentation de la tension méridienne de l'armature de carcasse étant au plus égale à l'augmentation de la pression de gonflage nécessaire pour maintenir à environ sa valeur nominale la flèche du pneumatique.

Le principe de solution conforme à l'invention consiste à choisir un profil méridien d'équilibre naturel de la fibre moyenne de l'armature de carcasse tel que la tension des tringles reste à peu près égale à la tension sous l'effet de la pression nominale et tel que l'augmentation de la tension méridienne de l'armature de carcasse au niveau des tringles reste inférieure à l'augmentation de la pression de gonflage.

En conséquence, le pneumatique conforme à l'invention est doté d'une armature de carcasse radiale dont la fibre par rapport au pneumatique de mêmes dimensions, dit nominal ou de référence, moyenne suit/entre les tringles et le sommet le profil d'équilibre naturel suivant la loi

$$\cos \varphi = \frac{R^2 - R_{e1}^2}{R_{s1}^2 - R_{e1}^2}$$ dans laquelle la quantité

$(R_{s1}^2 - R_{e1}^2) = k \frac{p_o}{p_1} (R_{so}^2 - R_{eo}^2)$, l'angle de tangence $\beta_1$ de l'armature de carcasse avec la tringle de bourrelet est tel que $\sin \beta_1 = \frac{\sin \beta_0}{k}$, k étant un coefficient positif compris entre 1 et $\frac{p_1}{p_o}$ mais toujours différent de ces limites $(1 \underset{\neq}{<} k \underset{\neq}{<} \frac{p_1}{p_o})$, et la quantité $R_{e1}^2$ est égale à $R_t^2 - \cos \beta_1 (R_{s1}^2 - R_{e1}^2)$.

...

D'une part, le profil d'équilibre naturel de la fibre neutre méridienne d'une armature de carcasse radiale suit la loi

$$(1) \quad \cos \varphi = \frac{R^2 - R_e^2}{R_s^2 - R_e^2} . \quad \text{Dans cette loi}$$

- $\varphi$ est l'angle de la tangente au profil avec l'axe de rotation du pneumatique, en un point situé à la distance radiale R de cet axe, avec $\cos \varphi < 0$ pour $R < R_e$ et $\cos \varphi > 0$ pour $R > R_e$ ;

- $R_s$ est la distance radiale de l'axe de rotation, du point où le profil a une tangente parallèle à l'axe de rotation ;

- $R_e$ est la distance radiale, de l'axe de rotation, du point où le profil atteint sa largeur axiale maximale ou bien où le profil a une tangente perpendiculaire à l'axe de rotation du pneumatique.

D'autre part, la tension T de la tringle s'exprime par la relation

$$(2) \quad T = p \sin \beta \, \frac{R_s^2 - R_e^2}{2} , \quad \text{expression dans laquelle}$$

p est la pression de gonflage et $\beta$ l'angle formé par la tangente à l'armature de carcasse au point de contact de l'armature de carcasse avec la tringle, et l'axe de rotation du pneumatique.

En outre, la tension méridienne t (par unité de longueur circonférentielle) de l'armature de carcasse au niveau de la tringle s'exprime par la relation

$$(3) \quad t = p \, \frac{R_s^2 - R_e^2}{2 \, R_t} , \quad \text{expression dans laquelle } R_t$$

est la distance radiale du point de contact de l'armature de carcasse avec la tringle, mesurée à partir de l'axe de rotation du pneumatique.

A la pression/nominal prévue pour la charge nominale les relations (1), (2), (3) ci-dessus s'écrivent pour le pneumatique nominal

$$\cos \varphi = \frac{R^2 - R_{eo}^2}{R_{so}^2 - R_{eo}^2} \quad \text{(profil d'équilibre naturel}$$

nominal),

...

$$T_o = p_o \sin \beta_o \frac{R_{so}^2 - R_{eo}^2}{2} \quad \text{(tension nominale de la tringle),}$$

$$t_o = p_o \frac{R_{so}^2 - R_{eo}^2}{2 R_t} \quad \text{(tension nominale de l'armature de}$$

carcasse au niveau de la tringle).

Selon l'invention, à la pression $p_1$ suffisante pour que la flèche du pneumatique en surcharge soit à peu près égale à la flèche du pneumatique/nominal , d'une part la tension $T_1$ de la tringle est à peu près égale à la tension nominale $T_o$, alors que la tension $t_1$ de l'armature de carcasse atteint la valeur $k\, t_o$, k étant compris entre 1 et la valeur du rapport $\frac{p_1}{p_o}$. Il vient

$$\frac{t_1}{t_o} = k = \frac{p_1}{p_o} \cdot \frac{(R_{s1}^2 - R_{e1}^2)}{(R_{so}^2 - R_{eo}^2)} \quad , \text{ d'où la valeur de la}$$

quantité $(R_{s1}^2 - R_{e1}^2)$ à introduire dans la loi donnant le profil d'équilibre naturel de la fibre neutre de l'armature de carcasse conforme à l'invention.

De l'équivalence des tensions $T_1$ et $T_o$ de la tringle on tire la valeur $\beta_1$ de l'angle $\varphi$ au niveau de la tringle, en tenant compte de la valeur ci-dessus de la quantité $(R_{s1}^2 - R_{e1}^2)$ conforme à l'invention : $\sin \beta_1 = \frac{\sin \beta_o}{k}$ . Ceci permet le calcul de la quantité $R_{e1}^2$ à partir de l'expression $\cos \beta_1 = \frac{R_t^2 - R_{e1}^2}{R_{s1}^2 - R_{e1}^2}$ , en remarquant que $\cos \beta_1 < 0$.

En pratique l'invention permet de choisir une tension (et, par suite, le renforcement) de l'armature de carcasse, inférieure à l'augmentation de la pression de gonflage appropriée pour maintenir la constance de la flèche. De préférence, k sera compris entre 1,15 et 1,30.

De préférence aussi on utilise une armature de carcasse formée, pour l'essentiel, d'une nappe unique de câbles, de préférence en fils d'acier.

Dans ce cas la fibre méridienne moyenne suit, par convention, l'axe des câbles. Dans le cas d'une armature de carcasse multi-nappes, la fibre moyenne est, par convention, située à mi-distance des nappes externe et interne.

...

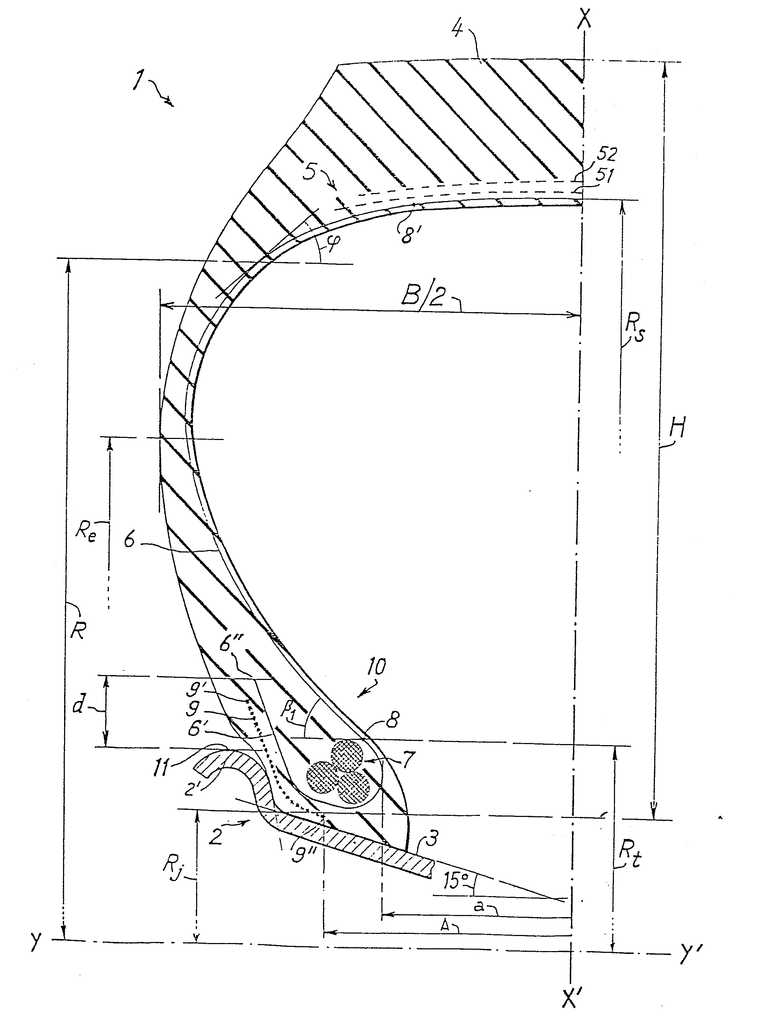

L'exemple d'exécution de l'invention dont la description fait référence au dessin concerne un pneumatique 1 de dimensions nominales 9,5-17,5 (en pouces). La figure unique de ce dessin est une vue en demi-coupe méridienne (non à l'échelle) de ce pneumatique.

Le rayon $R_j$ du siège de bourrelet de la jante correspondant à ce pneumatique est égal à 222 mm, les sièges 3 ayant une conicité de 15°.

Aux conditions nominales prévues par les normes en usage, un tel pneumatique (nominal) supporte une charge de 1 700 kg sous une pression de 6,75 bars et une flèche statique de 33 mm environ.

Le point de tangence 8 de l'armature de carcasse 6 avec la tringle 7 se situe à la distance $R_t$ = 238 mm de l'axe de rotation YY' du pneumatique. En outre, ce pneumatique a un rapport H/B = 0,9.

Pour une charge égale à 2 665 kg il faut gonfler le pneumatique à une pression de 8,5 bars pour obtenir une flèche d'écrasement de 36 mm voisine de la flèche/nominal du pneumatique (surcharge = 57 %).

Le pneumatique 1 est représenté monté sur une jante 2 à siège de bourrelet 3 tronconique incliné à 15° par rapport à l'axe de rotation de la roue figuré par la droite YY'. La trace XX' du plan équatorial sur le plan du dessin est un axe de symétrie de la coupe méridienne du pneumatique 1. La demi-largeur axiale maximale du pneumatique est égale à B/2 et la hauteur H sur la jante est mesurée à partir de l'extrémité du rayon $R_j$ du siège de bourrelet 3, tel que défini par les normes en usage pour le pneumatique nominal.

Le pneumatique 1 comporte sous la bande de roulement 4 une armature de sommet 5 formée de deux nappes de câbles 51 et 52.

L'armature de carcasse 6 tangente l'armature de sommet 5 au point 6' et la tringle 7 du bourrelet 10 au point 8. La fibre neutre suit le tracé 6. $R_t$ correspond au point 8.

L'armature de carcasse 6 mononappe est ancrée à la tringle 7 au moyen d'un brin terminal retourné 6'.

...

Contrairement à la disposition habituelle avec une armature de carcasse formée d'une seule nappe de câbles d'acier telle que 6 montrée au dessin, l'extrémité 6" du retournement 6' se situe radialement à l'extérieure de l'extrémité correspondante 9' de la nappe de raidissement 9. Cette dernière est composée de câbles obliques et est disposée axialement à l'extérieur du retournement 6' de l'armature de carcasse. L'invention permet ainsi une diminution de la largeur de la nappe de raidissement 9. L'autre extrémité 9", radialement intérieure, de la nappe de raidissement 9, se situe à une distance axiale A du plan équatorial de trace XX', supérieure à la distance axiale a minimale de l'armature de carcasse 6 dans le bourrelet 10. Il en résulte, malgré l'accroissement de la pression de gonflage, un accroissement de la flexibilité du bourrelet.

De préférence, la distance radiale d de l'extrémité 6" du retournement 6' par rapport au sommet 11 du rebord de jante 2' est comprise entre 5 et 20 % de la hauteur H du pneumatique 1.

Dans le cas du pneumatique de 9,5-17,5 choisi comme exemple, le coefficient k devant être compris entre 1 et $\frac{8,5}{6,75} = 1,26$, k égale 1,20.

Pour le pneumatique /propre à porter la charge nominale
$$R_{so} = 393 \text{ mm}$$
$$R_{eo} = 320 \text{ mm}$$
et $\beta_o = 43°.$

On en tire la valeur de la quantité $(R_{s1}^2 - R_{e1}^2) =$ 49 600 mm$^2$ correspondant au pneumatique selon l'invention. De même $\beta_1 = 34°.$

En remarquant que pour deux points du profil d'équilibre naturel correspondant aux rayons $R_1$ et $R_2$ on a

$$\cos \varphi_1 = \frac{R_1^2 - R_{e1}^2}{(R_{s1}^2 - R_{e1}^2)} \quad \text{et}$$

$$\cos \varphi_2 = \frac{R_2^2 - R_{e1}^2}{(R_{s1}^2 - R_{e1}^2)}, \quad \text{on trace facilement pas à pas}$$

...

le profil d'équilibre naturel de la fibre neutre de l'armature de carcasse selon l'invention, à l'aide d'un ordinateur se servant de la relation

$$\cos \varphi_1 - \cos \varphi_2 = \frac{R_1^2 - R_2^2}{(R_{s1}^2 - R_{e1}^2)} \quad \text{à partir de la valeur}$$

$\beta_1 = 34°$ pour $R_t = 238$ mm.

Sur ce tracé on relève les valeurs calculées

$R_{s1} = 384$ mm

$R_{e1} = 313$ mm.

Selon l'invention la tension de la tringle n'a pratiquement pas changé :

$T_o = 1198$ kg

$T_1 = 1179$ kg.

Selon l'invention la tension de l'armature de carcasse a augmenté d'environ 20 % :

$t_o = 7,38$ kg/mm

$t_1 = 8,86$ kg/mm

alors que la pression de gonflage a augmenté de 26 %.

D'autre part, malgré une augmentation de la charge de 57 % par rapport à la charge nominale, il convient de remarquer que la résistance au roulement du pneumatique selon l'invention, par 1 000 kg de charge et à une vitesse de 70 km/h, est inférieure de 8 % à celle du pneumatique (nominal) connu.

...

## REVENDICATIONS

1. Pneumatique pour véhicules moyens et gros porteurs (camionnettes et camions), doté d'une armature de carcasse radiale ancrée à au moins une tringle dans chaque bourrelet et d'une armature de sommet comportant au moins deux nappes obliques de fils ou câbles parallèles dans chaque nappe et croisés d'une nappe à l'autre, le pneumatique étant dépourvu de chambre à air indépendante, destiné à être monté sur des jantes de roues à sièges de bourrelets tronconiques, ayant un rapport H/B compris entre 0,6 et 1 et étant caractérisé en ce que lorsqu'il est monté et gonflé, mais non chargé, la fibre méridienne moyenne de son armature de carcasse (6) suit, par rapport au pneumatique nominal /entre les points de tangence ($\mathcal{E}$, $\mathcal{E}'$) de ladite armature avec la tringle de bourrelet (7) et l'armature de sommet (5), le profil d'équilibre naturel tel que

$$\cos \varphi = \frac{R^2 - R_{e1}^2}{R_{s1}^2 - R_{e1}^2},$$ la quantité $(R_{s1}^2 - R_{e1}^2)$ étant

égale environ à $k \dfrac{p_0}{p_1} (R_{so}^2 - R_{eo}^2)$, $p_0$ étant la pression de

gonflage nominale et $p_1$ la pression de gonflage telle que le pneumatique conserve la flèche/nominal du pneumatique sous l'effet d'une surcharge, k étant un coefficient positif compris entre 1 et la valeur du rapport $\dfrac{p_1}{p_0}$, l'angle $\beta_1$ formé par la tangente à l'armature de carcasse (6) au point de contact (8) avec la tringle et par l'axe de rotation YY' du pneumatique étant tel que $\sin \beta_1 = \dfrac{\sin \beta_0}{k}$ et la quantité $R_{e1}^2$ étant égale à $R_t^2 - \cos \beta_1 (R_{s1}^2 - R_{e1}^2)$.

2. Pneumatique selon la revendication 1, caractérisé en ce que le coefficient k est compris entre 1,15 et 1,30.

3. Pneumatique selon l'une des revendications 1 ou 2, caractérisé d'une part en ce que l'extrémité (6") du retournement (6') de l'armature de carcasse (6) autour de la tringle (7) se situe radialement à l'extérieur de l'extrémité (9') correspondante de la nappe de raidissement (9) du bourrelet (10),

...

cette nappe de raidissement (9) étant disposée axialement à l'extérieur dudit retournement (6'), d'autre part en ce que l'extrémité (6") du retournement (6') de l'armature de carcasse (6) est située de préférence à une distance (d) comprise entre 5 et 20 % de la hauteur (H) du pneumatique, par rapport au sommet (11) du rebord 2' de la jante (2).

| Catégorie | Citation du document avec indication, en cas de besoin, des parties pertinentes | Revendication concernée |
|---|---|---|
| | FR - A - 2 337 058 (GOODYEAR) <br> * Page 4, lignes 33-38; page 6, lignes 5-20 * <br><br> -- | 1 |
| A | FR - A - 2 337 059 (GOODYEAR) | 1 |
| A | FR - A - 2 337 050 (GOODYEAR) | 1 |
| A | FR - A - 2 281 239 (MICHELIN) | 1 |
| A | KAUTSCHUK UND GUMMI KUNSTSTOFFE, no. 3, 1973, pages 106-115 Heidelberg DE <br> E. ROBECCHI: "Tire calculation by means of a lamina model" | 1 |
| A | RUBBER CHEMISTRY AND TECNNOLOGY 1968, pages 977-987 Akron, US <br> S. GEHMAN: "Calculated deflected contours and load-deflection curves for tires" <br><br> ---- | 1 |

**DOCUMENTS CONSIDERES COMME PERTINENTS**

**CLASSEMENT DE LA DEMANDE (Int. Cl. 3)**

B 60 C 3/00

**DOMAINES TECHNIQUES RECHERCHES (Int. Cl.)**

B 60 C 3/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 27-02-1980 | SCHMITT |

OEB Form 1503.1   06.78